# EUROPÄISCHE PATENTANMELDUNG

(11) **EP 4 661 362 A1**
(43) Veröffentlichungstag der Anmeldung: **10.12.2025**
(21) Anmeldenummer: 25180686.5
(22) Anmeldetag: 04.06.2025
(51) Int. Cl.: H04L 43/50, H04L 43/18, H04L 43/028, H04L 41/14, H04L 41/22

(54) **VERFAHREN UND TEST-SYSTEM ZUR WEITERLEITUNG VON ETHERNET-NACHRICHTEN**

(30) Priorität: 07.06.2024 DE 102024115915
(71) Anmelder: dSPACE GmbH, 33102 Paderborn (DE)
(72) Erfinder: Schaeffer, Tobias, 33102 Paderborn (DE); Stolpe, Dr. Ralf, 33102 Paderborn (DE); Große Börger, Ralf, 33102 Paderborn (DE)

(57) **Zusammenfassung**

Verfahren zum Durchleiten und Manipulieren von Nachrichten eines ersten Steuergeräts (ECU A) und eines zweiten Steuergeräts (ECU B) durch ein Test-System (HIL), wobei das Test-System (HIL) über einen ersten Port mit dem ersten Steuergerät (ECU A) und über einen zweiten Port mit einer Quelle und/oder Senke für die Nachrichten des zweiten Steuergeräts (ECU B) verbunden ist und wobei das Test-System (HIL) einen ersten Controller (NIC A) und einen ersten TCP/IP Stack für die Nachrichten des ersten Steuergeräts und einen zweiten Controller (NIC B) und einen zweiten TCP/IP Stack für die Nachrichten des zweiten Steuergeräts (ECU B) sowie einen Nachrichtenspeicher zum Austausch von Nachrichten mit dem ersten TCP/IP Stack und dem zweiten TCP/IP Stack aufweist, wobei in dem Test-System (HIL) Nachrichten aus dem ersten TCP/IP Stack an den Nachrichtenspeicher übergeben und an den zweiten TCP/IP Stack weitergeleitet werden und umgekehrt, wobei Nachrichten mittels eines ersten Programms auswählbar sind, um vor dem Weiterleiten zu Testzwecken manipuliert zu werden, wobei die für die Manipulation ausgewählten Nachrichten, vom ersten oder vom zweiten Controller (NIC B) an den entsprechenden ersten oder zweiten TCP/IP Stack weitergeleitet und von dort in dem Nachrichtenspeicher abgelegt und manipuliert werden und wobei die manipulierten Nachrichten anschließend an den entsprechenden anderen Controller (NICA, NIC B) weitergeleitet werden, wobei das Test-System (HIL) ein Filterprogramm aufweist, wobei das Filterprogramm durch einen parametrierbaren Filter-Code implementiert ist,
wobei mittels des Filterprogramms, die nicht ausgewählten Nachrichten von dem ersten Controller (NIC A) direkt an den zweiten Controller (NIC B) übergeben werden oder umgekehrt.

## Beschreibung

Die Erfindung betrifft ein Verfahren zum Durchleiten und Manipulieren von Nachrichten, die zwischen einem ersten und einem zweiten Steuergerät ausgetauscht werden, mittels eines Test-Systems.

Ein solches Verfahren oder Test-System wird beispielsweise für Hardwarein-the-Loop (HIL) Tests verwendet, wenn die Kommunikation zwischen zwei Steuergeräten, etwa aus dem Automobilbereich, getestet werden muss.

Das Test-System ist über einen ersten Port mit dem ersten Steuergerät und über einen zweiten Port mit einer Quelle und/oder Senke für die zu versendenden und/oder zu empfangenden Nachrichten des zweiten Steuergeräts verbunden. Es weist einen ersten Controller und einen ersten TCP/IP Stack für die Nachrichten des ersten Steuergeräts und einen zweiten Controller und einen zweiten TCP/IP Stack für die Nachrichten des zweiten Steuergeräts sowie einen Nachrichtenspeicher zum Austausch von Nachrichten mit dem ersten TCP/IP Stack und dem zweiten TCP/IP Stack auf. In dem Test-System werden Nachrichten aus dem ersten TCP/IP Stack an den Nachrichtenspeicher übergeben und an den zweiten TCP/IP Stack weitergeleitet und umgekehrt, d.h. die Kommunikation kann auch bidirektional erfolgen. Dabei sind mittels eines ersten Programms Nachrichten auswählbar - beispielsweise über eine Benutzerangabe zu einer IP-Adresse, einer Portnummer oder einem Element aus einer AUTOSAR Beschreibungsdatei - um vor dem Weiterleiten zu Testzwecken manipuliert zu werden. Ein solches erstes Programm ist beispielsweise durch das Ethernet Configuration Package der Firma dSPACE GmbH gegeben. Dieses Werkzeug sorgt auch für das Weiterleiten der Nachrichten, die entsprechende Konfiguration der Kommunikation für den Test und für die Manipulation der Nachrichten. Das erste Programm ist auf dem Test-System oder auf einem zu Konfigurationszwecken mit dem Test-System verbundenen PC vorgehalten. Es kann auch aus mehreren Programmen oder Modulen bestehen. Mittels des ersten Programms wird eine Applikation, d.h. ein ausführbares Anwendungsprogramm zur Durchführung eines Testverfahrens auf dem Test-System generiert.

Die DE 10 2021 125399 A1 zeigt ein solches Verfahren und ein solches Test-System, bei dem ein HIL-Simulator als Test-System zwischen Kommunikationsteilnehmer geschaltet ist.

Bei den Kommunikationsteilnehmern kann es sich direkt um Steuergeräte handeln, aber auch um Quellen und/oder Senken für Nachrichten von Steuergeräten, wie z.B. ein Replay-System, von dem zuvor aufgenommene Nachrichten abgespielt werden.

In dem Test-System der DE 10 2021 125399 A1 werden die Nachrichten eines Steuergeräts vom ersten oder vom zweiten Controller an den entsprechenden ersten oder zweiten TCP/IP Stack weitergeleitet (je nachdem, an welchem Port sie eingegangen sind) und von dort in dem Nachrichtenspeicher abgelegt, um von dort entweder nur an den entsprechenden anderen TCP/IP Stack weitergeleitet oder auch zuvor noch manipuliert zu werden. Alle Nachrichten werden anschließend an den entsprechenden anderen Controller weitergeleitet.

Durch diesen Vorgang im Test-System wird viel Zeit in der Kommunikation zwischen den Kommunikationsteilnehmern verloren.

Aufgabe der Erfindung ist es, den Stand der Technik weiterzubilden.

Für das erfindungsgemäße Verfahren weist das Test-System ein Filterprogramm auf, wobei das Filterprogramm durch einen parametrierbaren Filter-Code implementiert ist, wobei mittels des Filterprogramms die nicht für die Manipulation ausgewählten Nachrichten von dem ersten Controller direkt an den zweiten Controller übergeben werden oder umgekehrt. Auch in diesem Fall ist das Verfahren bidirektional ausführbar.

Das Filterprogramm nimmt die nicht ausgewählten Nachrichtenpakete schon auf der Treiber-Ebene des Nachrichten Controllers (z.B. Ethernet-Controller) entgegen, bevor sie an den TCP/IP-Stack weitergeleitet werden. Das Filterprogramm kann beispielsweise als ein Mechanismus des Kernels des Test-Systems implementiert sein.

Das System gewinnt deutlich an Performanz bei der Durchleitung von Nachrichten, wenn die Nachrichten nicht über die TCP/IP Stack und den Treiber geleitet werden müssen.

In einer bevorzugten Ausführungsform werden für die Filterung eine Portnummer, eine IP-Adresse des Senders und/oder Empfängers der zu manipulierenden Nachricht oder eine Angabe zu einem mit der zu manipulierenden Nachricht in Bezug stehenden Element aus einer AUTOSAR Beschreibungsdatei entgegengenommen. Insbesondere ist durch den parametrierbaren Filter-Code die Möglichkeit gegeben, diese Parameter zur Laufzeit entgegenzunehmen. Dies ermöglicht bei einer Service-basierten Kommunikation, die Filterparameter nach dem Service Discovery, also auch zur Laufzeit, zu übergeben. Die Parameter können dem Filterprogramm entweder von dem ersten Programm oder vom Benutzer mittels einer Benutzerschnittstelle oder mittels einer Datei übergeben werden.

In einer Ausführungsform ist das Filterprogramm in Hardware implementiert. Dies ermöglicht eine noch schnellere Durchführung des Filtervorgangs. In diesem Fall sind der erste Controller und der zweite Controller zusammen mit dem Filterprogramm auf einer gemeinsamen programmierbaren Netzwerkkarte implementiert. Für die Implementierung in Hardware wird der parametrierbare Filter-Code (in der Regel ein funktional bzw. semantisch eingeschränkter C-Code, bei dem z.B. keine Pointer verwendet werden können) in einen einfachen Byte-Code übersetzt, den die Netzwerkkarte direkt ausführen kann.

In einer anderen Ausführungsform werden mittels des Filterprogramms die Protokollfelder der auf Layer 2 (Data Link Layer im OSI-Modell) vom ersten Controller empfangenen Ethernet-Nachrichten auf Layer 3 (Network Layer im OSI-Modell) und/oder Layer 4 (Transport Layer im OSI Modell) inspiziert, um zu entscheiden, ob eine Nachricht direkt an den zweiten Controller weitergeleitet wird. Entsprechendes gilt für die umgekehrte Kommunikationsrichtung.

In einer Ausführungsform wird für das Filtern der Nachrichten ein XDP (eXpress Data Path) Pfad genutzt. Er wird im Zusammenspiel mit dem sogenannten erweiterten Berkeley Packet Filter (eBPF) verwendet. Die Funktionalitäten des eBPF-Programms sind beispielsweise standardmäßig in den Kernels des Betriebssystems Linux integriert. Dieses Betriebssystem kann auch für das Test-System verwendet werden. Bei dem XDP Filter handelt es sich um einen frühen sogenannten "Hook" im Empfangsweg des Kernels. Er ist im Treiber des Netzwerk Interface Controllers (NIC) direkt nach dem Interrupt Handling und der Speicherallokation für den Stack platziert.

In einer weiteren Ausführungsform handelt es sich bei den Nachrichten um Ethernet-Nachrichten für eine Service-basierte Kommunikation. Die Parametrierung des Filterprogramms erfolgt dann bevorzugt zur Laufzeit, nach Abschluss der sogenannten Service-Discovery Phase, während ein Informationsaustausch erfolgt, um zu ermitteln, welche Teilnehmer welche Nachrichten austauschen. Die Parametrierung des Filterprogramms erfolgt dann, indem die aktuellen Portnummern und IP-Adressen für die Nachrichten als Parameter an das Filterprogramm übergeben werden.

Der Filter-Code für den XDP Filter wird als Programm-Code, üblicher Weise als C-Code geschrieben. Dieser wird dann zu einem eBPF-Programm kompiliert, in den Kernel geladen und aktiviert, um dort verwendet werden zu können. Die Aktivierung erfolgt durch einen "Software-Schalter", d.h. eine Einstellung in der Software, die bewirkt, dass das Filterprogramm nicht nur geladen ist, sondern im Testlauf auch ausgeführt wird. Ein solcher Software-Schalter kann auch bei der Implementierung des Filters in Hardware verwendet werden.

In dem Filter-Code treten erfindungsgemäß Filterkriterien wie Portnummern, die erst nach dem Service Discovery bekannt sind, nur als Parameter auf und können somit auch erst zur Laufzeit (insbesondere nach dem Service Discovery) übergeben werden. Es ist somit nicht erforderlich, dass diese Parameter dem Filterprogramm vor der Simulation bekannt gemacht werden.

Bevorzugt ist es ermöglicht, mehrere Filtereinstellungen gleichzeitig zu setzen, bzw. Filtereinstellungen zu kombinieren. So lassen sich komplexere Bedingungen prüfen.

In einer Ausführungsform erfolgt die Parametrierung des Filterprogramms zur Konfiguration der Auswahl der zu manipulierenden Nachrichten über eine grafische Benutzerschnittstelle. In dieser Ausführung werden die Filterparameter wie Portnummern, IP-Adressen oder IDs vom Benutzer in die grafische Benutzerschnittstelle eingegeben oder aus einer Auswahlliste ausgewählt. Im Hintergrunde werden dann vorgefertigte Code-Stücke für den Filter-Code kombiniert und der Filter-Code generiert, ohne dass der Benutzer selbst Code zu schreiben braucht.

Die grafische Benutzerschnittstelle kann auch als Teil des ersten Programms ausgebildet sein.

In einer weiteren Ausführungsform ist zwischen das erste Steuergerät und den ersten Port ein erstes Switch-Gerät geschaltet und so das erste Steuergerät über das erste Switch-Gerät mit dem Test-System verbunden, wobei das erste Switch-Gerät mit dem ersten Controller verbunden ist. Dabei ist über das erste Switch-Gerät und den ersten Port noch ein drittes Steuergerät an das Test-System angeschlossen und von dem ersten Controller werden Nachrichten des zweiten Steuergeräts auch an das dritte Steuergerät versendet und/oder Nachrichten des dritten Steuergeräts empfangen und durch das Test-System an das zweite Steuergerät weiteregeleitet und gegebenenfalls zuvor manipuliert, wobei die Nachrichten, die nicht für die Manipulation ausgewählt sind, mittels des Filterprogramms direkt vom ersten Controller an den zweiten Controller weitergeleitet werden oder umgekehrt (in Abhängigkeit von der Kommunikationsrichtung).

Das erfindungsgemäße Verfahren ist also nicht auf das Testen der Kommunikation zwischen zwei Steuergeräten beschränkt, sondern kann auf eine größere Anzahl von Steuergeräten erweitert werden. Nachrichten des zweiten Steuergeräts, die am zweiten Port und somit am zweiten Controller eingehen, und durch das Test-System geleitet werden, werden vom ersten Controller zu dem ersten Switch-Gerät versendet, welches die Nachrichten ihrer Bestimmung entsprechend an das erste oder das dritte Steuergerät versendet. Prinzipiell kann an das Switch-Gerät ein ganzes Netzwerk von Steuergeräten angeschlossen sein.

In einer Ausführungsform ist die Quelle und/oder Senke für die Nachrichten des zweiten Steuergeräts (d.h. zu versendende und/oder zu empfangende Nachrichten) durch das zweite Steuergerät selbst oder durch ein TAP- oder ein weiteres Switch-Gerät oder einen weiteren Nachrichtenspeicher (d.h. durch ein Wiedergabe- bzw. ein sogenanntes Replay-System, von dem gespeicherte Nachrichten einer früheren Aufzeichnung abgespielt werden) gegeben. Auf diese Weise lässt sich entweder die direkte Kommunikation zwischen zwei Steuergeräten testen, wenn das Test-System zwischen die beiden Steuergeräte geschaltet ist, oder es kann getestet werden, wie ein Steuergerät auf gespeicherte Nachrichten aus einer früheren Kommunikation reagiert. Die Nachrichten des zweiten Steuergeräts können von diesem auch über einen TAP (Test Access Point) abgezapft und über das Test-System an das erste Steuergerät versendet oder es können Nachrichten für das zweite Steuergerät an dem TAP empfangen und an das zweite Steuergerät weitergeleitet werden. Ebenfalls ist es möglich, dass das Test-System über ein weiteres Switch-Gerät mit einem Netzwerk aus mehreren Steuergeräten verbunden ist, welche Nachrichten an das erste Steuergerät senden und von diesem empfangen.

Wie zuvor beschrieben, kann auch das erste Steuergerät über ein erstes Switch-Gerät nur mittelbar über den ersten Port mit dem Test-System verbunden sein, wobei an dem ersten Switch-Gerät ebenfalls weitere Steuergeräte angeschlossen werden können. So wird ermöglicht, auch die Kommunikation zwischen zwei Netzwerken zu testen und zu manipulieren.

Ob das erste Steuergerät mit dem Test-System mittelbar oder unmittelbar verbunden ist, wird hier in der Regel nicht explizit unterschieden.

Die Aufgabe wird auch gelöst durch ein Test-System, welches zur Durchführung des erfindungsgemäßen Verfahrens eingerichtet ist, wobei das Test-System eine Recheneinheit, einen ersten Port, einen ersten Controller und einen ersten TCP/IP-Stack für die Nachrichten des ersten Steuergeräts und einen zweiten Port, einen zweiten Controller und einen zweiten TCP/IP-Stack für die Nachrichten des zweiten Steuergeräts sowie einen Nachrichtenspeicher zum Austausch von Nachrichten mit dem ersten TCP/IP-Stack und dem zweiten TCP/IP-Stack aufweist. Weiter weist das Test-System ein erstes Programm auf, das eingerichtet ist, Nachrichten aus dem ersten TCP/IP-Stack an Nachrichtenspeicher zu übergeben an den zweiten TCP/IP-Stack weiterzuleiten und umgekehrt. Das Test-System weist ein erstes Programm auf, das eingerichtet ist, ein Auswahlkriterium für Nachrichten entgegenzunehmen, um die ausgewählten Nachrichten vor dem Weiterleiten zu manipulieren. Das Test-System weist ein Filterprogramm auf, wobei das Filterprogramm durch einen parametrierbaren Filter-Code implementiert ist, wobei das Test-System eingerichtet ist, mittels des Filterprogramms die für die Manipulation ausgewählten Nachrichten von dem ersten Controller direkt an den zweiten Controller zu übergeben oder umgekehrt. Das Filterprogramm kann aus mehreren Programmen zusammengesetzt sein.

Dadurch müssen die Nachrichten nicht den langen und zeitraubenden Weg über die TCP/IP Stacks und den Nachrichtenspeicher durchlaufen.

Die Erfindung wird nachfolgend unter Bezugnahme auf die Zeichnungen näher erläutert. Darin zeigt:
- Figur 1: eine schematische Ansicht eines zwischen zwei Steuergeräte geschalteten Test-Systems,
- Figur 2: eine schematische Ansicht auf den Weg der Nachrichten durch das Test-System im Stand der Technik,
- Figur 3: eine schematische Ansicht auf den Weg der Nachrichten durch das erfindungsgemäße Test-System,
- Figur 4a-b: schematische Ansichten auf den Weg der Nachrichten durch das erfindungsgemäße Test-System, wobei die Steuergeräte in unterschiedlichen Konfigurationen an das Test-System angeschlossen sind,
- Figur 5: schematische Ansicht auf den Weg der Nachrichten durch das erfindungsgemäße Test-System, wobei das Filterprogramm in der Hardware-Ebene implementiert ist.

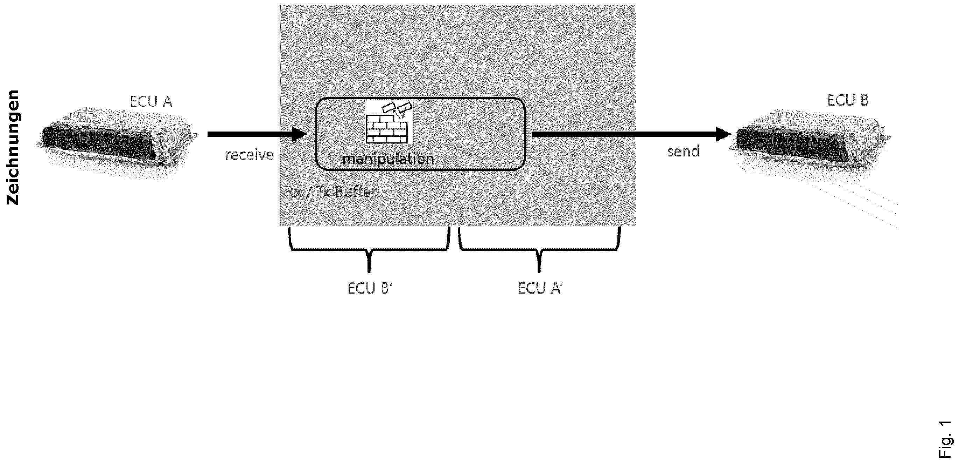

Die Abbildung der Figur 1 zeigt ein Test-System (HIL), welches Nachrichten von einem ersten Steuergerät ECU A empfängt, in einem Rx/Tx Nachrichtenspeicher ablegt und mittels eines ersten Programms manipuliert, bevor die Nachrichten an ein zweites Steuergerät ECU B versendet werden. Um für die Steuergeräte transparent zu sein, nimmt das Test-System (HIL) die Nachrichten des ersten Steuergeräts ECU A als ein simuliertes zweites Steuergerät ECU B' an, welches von dem ersten Steuergerät ECU A nicht von dem realen zweiten Steuergerät ECU B unterschieden werden kann, da alle Reaktionen, Namen und Kennungen exakt imitiert werden. Genauso wird beim weiteren Versenden der Nachrichten an das zweite Steuergerät ECU B das erste Steuergerät ECU A durch ein simuliertes Steuergerät ECU A' imitiert, sodass das zweite Steuergerät ECU B den Eindruck erhält, es bekäme die Nachrichten direkt vom ersten Steuergerät ECU A. Mutatis mutandis läuft die Kommunikation in umgekehrter Richtung über das Test-System (HIL), wenn Nachrichten von dem zweiten Steuergerät ECU B an das erste Steuergerät ECU A gesendet und dort empfangen werden. Im Folgenden ist in den Figuren immer nur eine Richtung abgebildet.

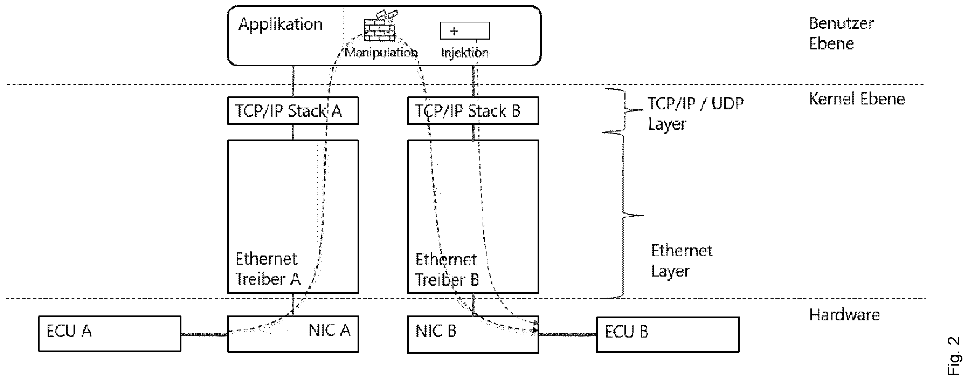

Die Abbildung der Figur 2 zeigt schematisch den Weg der Nachrichten durch das Test-System (HIL).

Zunächst werden die Nachrichten des ersten Steuergeräts ECU A von einem ersten Netzwerk Interface Controller NIC A auf der Hardware-Ebene entgegengenommen. Dem ersten Controller NIC A ist auf der Kernel Ebene ein Ethernet Treiber A zugeordnet, der die Software-Befehle für die Verarbeitung der Nachrichten durch den ersten Controller bereitstellt. Mittels des Ethernet Treibers A werden alle Nachrichten an den ersten TCP/IP Stack A weitergegeben. Dieser befindet sich in der TCP/IP bzw. UDP Layer des Systems (Layer 4 des OSI Modells). Aus diesem Stack bedient sich eine von dem ersten Programm erstellte ausführbare Anwendung (Applikation), welche auf der Benutzer Ebene des Test-Systems vorgehalten ist, um in einem Nachrichtenspeicher (nicht explizit dargestellt) gegebenenfalls eine Manipulation von Nachrichten vorzunehmen. Es besteht auch die Möglichkeit, dass die ausführbare Anwendung (Applikation) dem Nachrichtenfluss weitere, neue Nachrichten hinzufügt, was auch als Injektion bezeichnet wird. Die im Folgenden an das zweite Steuergerät ECU B zu versendenden Nachrichten werden aus dem Nachrichtenspeicher an den zweiten TCP/IP Stack B übergeben. Über diesen zweiten TCP/IP Stack B und mittels des zweiten Ethernet Treibers B werden die Nachrichten von dem zweiten Netzwerk Interface Controller NIC B an das zweite Steuergerät ECU B versendet. Nachrichten von dem zweiten Steuergerät ECU B gelangen über den umgekehrten Weg zum ersten Steuergerät ECU A. Das Verfahren ist prinzipiell bidirektional anwendbar.

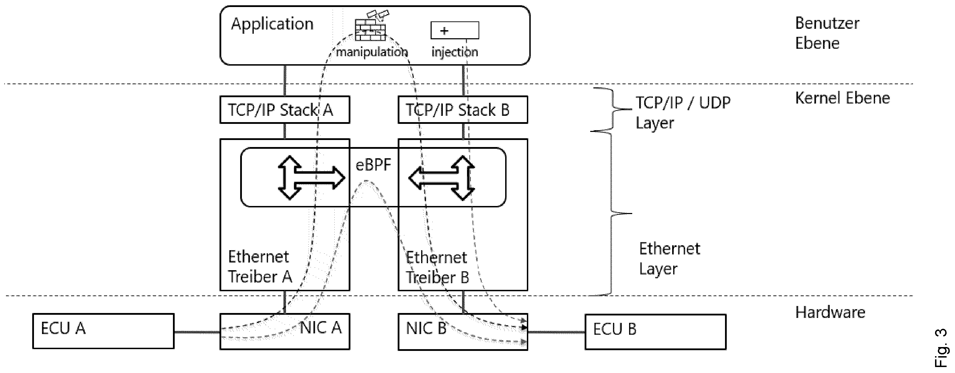

Die Figur 3 zeigt nun das Test-System mit einer erfindungsgemäßen Erweiterung durch ein Filterprogramm eBPF, das in der Treiber-Ebene vorgehalten ist. Dieses Filterprogramm bewirkt, dass nur bestimmte Nachrichten in die TCP/IP Stacks aufgenommen werden. Beispielsweise könnte der Filter-Code etwa folgendermaßen aussehen:

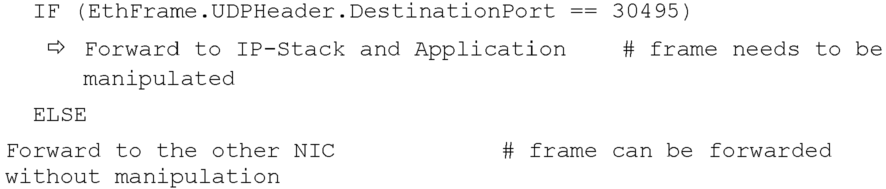

Dieses Filterprogramm lässt vom Treiber nur die Nachrichten mit dem Bestimmungsport 30495 an den TCP/IP Stack übergeben. Alle anderen Nachrichten werden direkt an den zweiten Treiber B übergeben. Sie müssen nicht für den Stack allokiert werden und können direkt weiter an das zweite Steuergerät ECU B verschickt werden.

Für die Filterung können auch komplexere Bedingungen implementiert werden, z.B.: IF ((EthFrame.UDPHeader.DestinationPort == 30495) && EthFrame.SrcMACAddress == 01:02:03:04:05:06)

Hier müssen sowohl ein bestimmter Bestimmungsport als auch eine bestimmte Adresse gegeben sein, damit die Nachricht über die Benutzerebene gesendet wird.

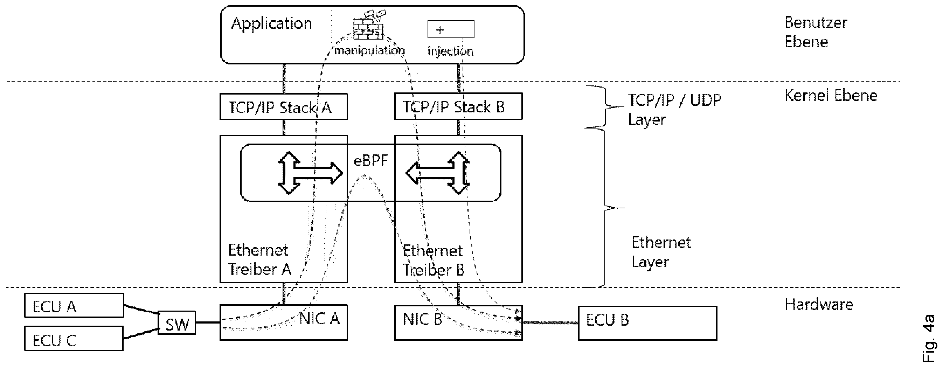

Figur 4a zeigt schematisch eine Ausführungsform der Erfindung, bei der am ersten Controller NIC A zwei Steuergeräte, nämlich das erste Steuergerät ECUA und ein drittes Steuergerät ECU C über ein erstes Switch-Gerät SW angeschlossen sind. In diesem Fall muss für das zweite Steuergerät ECU B vom Simulator auch das dritte Steuergerät ECU C simuliert werden.

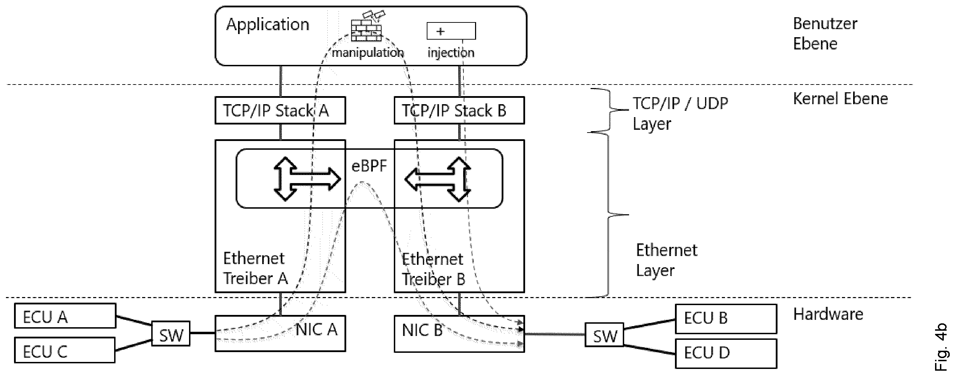

Eine weitere Abwandlung zeigt Figur 4b, wo das zweite Steuergerät ECU B nicht direkt, sondern über einen Switch SW mit dem Test-System verbunden ist. An dem Switch SW ist noch ein viertes Steuergerät ECU D angeschlossen. Bei diesem Aufbau können Nachrichten vom ersten Steuergerät ECU A und/oder dritten Steuergerät ECU C über das Test-System an das zweite Steuergerät ECU B und/oder das vierte Steuergerät ECU D geleitet werden. Die umgekehrte Kommunikationsrichtung ist auch möglich. Für diesen Fall muss auch das vierte Steuergerät mittels des Test-Systems für seine Kommunikationspartner auf der anderen Seite des Test-Systems simuliert werden.

Sowohl am ersten als auch am zweiten Controller ist somit ein Switch SW angeschlossen, über den Nachrichten von mehreren Steuergeräten ECU A, ECU B, ECU C, ECU D vom Test-System empfangen und weitergeleitet werden. Das Test-System kann also zwischen Netzwerke von Steuergeräten geschaltet werden, um für die Steuergeräte transparent Nachrichten zu Testzwecken durchzuleiten, abzufangen oder zu manipulieren.

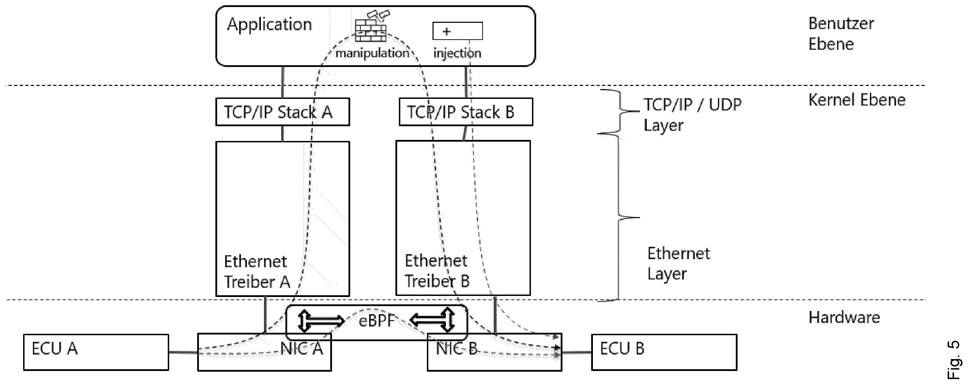

Abbildung 5 zeigt eine Ausführungsform der Erfindung, bei der das Filterprogramm in der Hardware-Ebene implementiert ist. Diese Ausführungsform ist umsetzbar, wenn sich die Controller NIC A und NIC B auf derselben Netzwerkkarte befinden.

## Patentansprüche

1. Verfahren zum Durchleiten und Manipulieren von Nachrichten eines ersten Steuergeräts (ECU A) und eines zweiten Steuergeräts (ECU B) durch ein Test-System (HIL), wobei das Test-System (HIL) über einen ersten Port mit dem ersten Steuergerät (ECU A) und über einen zweiten Port mit einer Quelle und/oder Senke für die Nachrichten des zweiten Steuergeräts (ECU B) verbunden ist und wobei das Test-System (HIL) einen ersten Controller (NIC A) und einen ersten TCP/IP Stack für die Nachrichten des ersten Steuergeräts und einen zweiten Controller (NIC B) und einen zweiten TCP/IP Stack für die Nachrichten des zweiten Steuergeräts (ECU B) sowie einen Nachrichtenspeicher zum Austausch von Nachrichten mit dem ersten TCP/IP Stack und dem zweiten TCP/IP Stack aufweist, wobei in dem Test-System (HIL) Nachrichten aus dem ersten TCP/IP Stack an den Nachrichtenspeicher übergeben und an den zweiten TCP/IP Stack weitergeleitet werden und umgekehrt, wobei Nachrichten mittels eines ersten Programms auswählbar sind, um vor dem Weiterleiten zu Testzwecken manipuliert zu werden, wobei die für die Manipulation ausgewählten Nachrichten, vom ersten oder vom zweiten Controller (NIC B) an den entsprechenden ersten oder zweiten TCP/IP Stack weitergeleitet und von dort in dem Nachrichtenspeicher abgelegt und manipuliert werden und wobei die manipulierten Nachrichten anschließend an den entsprechenden anderen Controller (NICA, NIC B) weitergeleitet werden, wobei das Test-System (HIL) ein Filterprogramm aufweist, wobei das Filterprogramm durch einen parametrierbaren Filter-Code implementiert ist,
wobei mittels des Filterprogramms, die nicht ausgewählten Nachrichten von dem ersten Controller (NIC A) direkt an den zweiten Controller (NIC B) übergeben werden oder umgekehrt.

2. Verfahren nach Anspruch 1, wobei für die Filterung eine Portnummer, eine IP-Adresse des Senders und/oder Empfängers der zu manipulierenden Nachricht oder eine Angabe zu einem mit der zu manipulierenden Nachricht in Bezug stehenden Element aus einer AUTOSAR Beschreibungsdatei von dem Filterprogramm entgegengenommen werden, insbesondere zur Laufzeit.

3. Verfahren nach Anspruch 1 oder 2, wobei das Filterprogramm in Hardware implementiert ist.

4. Verfahren nach Anspruch 1 oder 2, wobei mittels des Filterprogramms die Protokollfelder der auf Layer 2 vom ersten Controller (NIC A) empfangenen Ethernet-Nachrichten auf Layer 3 und/oder 4 inspiziert werden, um zu entscheiden, ob eine Nachricht direkt an den zweiten Controller (NIC B) weitergeleitet wird.

5. Verfahren nach einem der vorstehenden Ansprüche, **dadurch gekennzeichnet, dass** das Filterprogramm zumindest teilweise durch einen XDP-Filter gegeben ist.

6. Verfahren nach einem der vorstehenden Ansprüche, wobei es sich bei den Nachrichten um Ethernet-Nachrichten für eine Service-basierte Kommunikation handelt und wobei die Parametrierung des Filter-Codes zur Laufzeit erfolgt, nach Abschluss der Service-Discovery Phase, indem die aktuellen Portnummern und IP-Adressen für die zu manipulierenden Nachrichten als Parameter an das Filterprogramm übergeben werden.

7. Verfahren nach Anspruch 6, wobei für das Filterprogramm ein parametrierter Programm-Code generiert und anschließend kompiliert und mit einem erweiterten Berkeley Paket Filter (eBPF)-Programm verwendet wird.

8. Verfahren nach einem der vorstehenden Ansprüche, wobei mehrere Filtereinstellungen gesetzt werden.

9. Verfahren nach einem der vorstehenden Ansprüche, wobei die Parametrierung des Filterprogramms über eine grafische Benutzereingabe vorgenommen wird, um die Auswahl der Nachrichten für die Manipulation zu konfigurieren.

10. Verfahren nach einem der vorstehenden Ansprüche, wobei zwischen das erste Steuergerät (ECU A) und den ersten Port ein erstes Switch-Gerät (SW) geschaltet ist und das erste Steuergerät (ECU A) über das erste Switch-Gerät (SW) mit dem Test-System (HIL) verbunden ist, wobei das erste Switch-Gerät (SW) mit dem ersten Controller (NIC A) verbunden ist, wobei über das erste Switch-Gerät (SW) und den ersten Port ein drittes Steuergerät (ECU C) an das Test-System (HIL) angeschlossen ist und wobei mittels des ersten Controllers (NIC A) Nachrichten des zweiten Steuergeräts (ECU B) an das dritte Steuergerät (ECU C) versendet werden und/oder Nachrichten des dritten Steuergeräts (ECU C) empfangen und durch das Test-System (HIL) an das zweite Steuergerät (ECU B) weitergeleitet und gegebenenfalls zuvor manipuliert werden, wobei die Nachrichten, die nicht für die Manipulation ausgewählt sind, mittels des Filterprogramms direkt vom ersten Controller (NIC A) an den zweiten Controller (NIC B) weitergeleitet werden oder umgekehrt.

11. Verfahren nach einem der vorstehenden Ansprüche, wobei die Quelle und/oder Senke für die Nachrichten des zweiten Steuergeräts (ECU B) durch das zweite Steuergerät (ECU B) selbst oder durch ein TAP- oder ein weiteres Switch-Gerät (SW) oder einen weiteren Nachrichtenspeicher, insbesondere ein Replay-System, gegeben ist.

12. Test-System (HIL) zur Durchführung des Verfahrens nach einem der vorstehenden Ansprüche, wobei das Test-System (HIL) eine Recheneinheit, einen ersten Port, einen ersten Controller (NIC A) und einen ersten TCP/IP-Stack für die Nachrichten des ersten Steuergeräts (ECU A) und einen zweiten Port, einen zweiten Controller (NIC B) und einen zweiten TCP/IP-Stack für die Nachrichten des zweiten Steuergeräts (ECU B) sowie einen Nachrichtenspeicher zum Austausch von Nachrichten mit dem ersten TCP/IP-Stack und dem zweiten TCP/IP-Stack aufweist und wobei das Test-System (HIL) ein erstes Programm aufweist, das eingerichtet ist, Nachrichten aus dem ersten TCP/IP-Stack an den Nachrichtenspeicher zu übergeben an den zweiten TCP/IP-Stack weiterzuleiten und umgekehrt, und wobei das erste Programm eingerichtet ist, ein Auswahlkriterium für Nachrichten entgegenzunehmen, um die ausgewählten Nachrichten vor dem Weiterleiten zu Testzwecken zu manipulieren, wobei das Test-System (HIL) ein Filterprogramm aufweist, wobei das Filterprogramm durch einen parametrierbaren Filter-Code implementiert ist,
wobei das Test-System (HIL) eingerichtet ist, mittels des Filterprogramms, die nicht für die Manipulation ausgewählten Nachrichten von dem ersten Controller (NIC A) direkt an den zweiten Controller (NIC B) zu übergeben oder umgekehrt.
